# EUROPEAN PATENT APPLICATION

(11) **EP 4 675 257 A2**
(43) Date of publication of application: **07.01.2026**
(21) Application number: 25218103.7
(22) Date of filing: 28.02.2023
(51) Int. Cl.: G01N 15/14

(54) **APPARATUSES SYSTEMS AND METHODS FOR THREE DIMENSIONAL MICRODISSECTION OF SAMPLES**

(30) Priority: 01.03.2022 US 202263315444 P
(62) Divisional of application: 23763861.4
(71) Applicant: University of Washington, Seattle, WA 98105 (US)
(72) Inventor: GLASER, Adam K., Washington, 98105-4721 (US); T.C. LIU, Jonathan, Washington, 98105-4721 (US); P. REDER, Nicholas, Washington, 98105-4721 (US)
(74) Representative: M. Zardi & Co S.A.

(57) **Abstract**

Embodiments of the disclosure are drawn to apparatuses, systems, and methods for 3D microdissection of samples. A microdissection system includes an imaging system and an extraction system. The imaging system may include a fluorescent microscope, and collects a 3D image of a sample. A region of interest is identified in the sample based on the 3D image. The extraction system extracts the identified region of interest. The imaging, identification, and/or extraction may be manual, automated, or a combination thereof.

## Description

### CROSS-REFERENCE TO RELATED APPLICATION(S)

This application claims the benefit under 35 U.S.C. § 119 of the earlier filing date of U.S. Provisional Application Serial No. 63/315,444 filed March 1, 2022, the entire contents of which is hereby incorporated by reference in its entirety for any purpose.

### STATEMENT REGARDING RESEARCH & DEVELOPMENT

This invention was made with government support under Grant Nos. K99 CA240681 and R01 EB031002, awarded by the National Institute of Health Sciences and Grant Nos. W81XWH-18-1-0358 and W81XWH-19-1-0589, awarded by the U.S. Army Medical Research and Materiel Command. The government has certain rights in the invention.

### BACKGROUND

There may be many applications where it is useful to identify regions of interest in a sample and remove those regions of interest for further analysis. For example, a biological specimen may be examined under a microscope and portions of the sample may be removed. However, existing techniques may be limited in terms of the size, shape and location of regions of interest within the sample which can be identified and/or in introducing undesirable chemical and/or physical changes to the sample. For example, formalin fixation and paraffin embedding (FFPE), developed in the 1890s, reduces nucleic acid yield from the extracted region of interest and induces "pseudo" mutations that alter sequencing results for both DNA and RNA assays. Laser capture microdissection (LCM) is slow, expensive, and provides a low yield of tumor tissue and nucleic acids. Furthermore, since samples acquired by LCM (of thin 5-µm sections) are typically small (< 100 cells), the data may not be representative of the population of cells in 3 dimensions. Due to these limitations, coarse macrodissection is more commonly used by laboratories, in which slide-mounted tissue sections are manually annotated and scraped off the slide with a razor blade. There is thus a need for techniques which can image, locate, and dissect regions of interest in relatively thick samples.

### SUMMARY

In at least one aspect, the present disclosure relates to a method which includes generating a 3D image of a volume of a sample using fluorescent microscopy, identifying a region of interest in the sample based on the 3D image, and extracting the region of interest out of the sample.

The method may also include generating the 3D image with an open-top light sheet microscope. The method may also include purifying nucleic acids, proteins, metabolites, carbohydrates, lipids, or combinations thereof. The method may include generating the 3D image with a first system and cutting the region of interest with a second system separate from the first system.

The method may include performing automatic identification of the region of interest using a trained classifier. The method may include training the classifier with 2D training images, 3D training images, or combinations thereof. The method may include capturing a plurality of 2D images of the sample and generating the 3D image based on the plurality of 2D images. The method may include virtually extracting the region of interest. The method may include physically extracting the region of interest by one of a mechanical cutting element and an optical cutting element. The method may include labelling the sample with a fluorescent dye specific to one or more components of the region of interest.

In at least one aspect, the present disclosure relates to a system which includes an imaging system and an extraction system. The imaging system captures a 3D image of a sample based on fluorescent microscopy. The extraction system extracts material from the sample based on coordinates of regions of interest located within the 3D image.

The imaging system may include an open-top light sheet microscope. The imaging system may include an illumination objective, a first collection objective and a second collection objective. The first collection objective may have a higher resolution than the second collection objective. The illumination objective has an illumination optical axis, the first collection objective has a first optical axis which forms a first angle with the illumination optical axis, and the second collection objective has a second optical axis which forms a second angle with the illumination optical axis. The first angle and the second angle may be different. The imaging system may include a stage configured to support the sample on a first surface, and the illumination objective, the first collection objective and the second collection objective may be are positioned below a second surface of the stage opposite the first surface.

The extraction system may be attached to the imaging system. The extraction system may be a modular component mounted on a stage of the imaging system. The imaging system may include a biopsy holder which holds core needle biopsies. The system may also include a controller configured to identify the region of interest based on the 3D image. The controller may operate the extraction system to extract the region of interest.

In at least one aspect, the present disclosure relates to a system which includes an imaging system which captures a 3D image of a sample based on fluorescent microscopy, an extraction system which includes an extraction tool, and a computing system. The computing system includes a processor and a non-transitory computer readable medium encoded with instructions which, when executed by the processor, cause the computing system to identify a region of interest in the sample based on the 3D image and extract the identified region of interest based with the extraction tool.

The non-transitory computer readable medium may also incldue a classifier, and the region may be identified based in part, on the classifier. The computing system may also include a display which shows the 3D image and an input/output system which allows manual identifying of the region of interest based on the displayed 3D image.

The imaging system may be an open-top light sheet microscope. The computing system may operate an actuator to move the extraction tool relative to the sample, the sample relative to the extraction tool or combinations thereof. The instructions, when executed by the processor may also cause the system to capture a first 3D image at a first resolution, identify a preliminary region of interest based on the first 3D image, capture a second 3D image of the preliminary region of interest based on the first 3D image where the second 3D image is at a second resolution higher than the first resolution, and determine if the preliminary region of interest is the region of interest based on the second 3D image.

### BRIEF DESCRIPTION OF THE DRAWINGS

**Figure 1** is a block diagram of a microdissection system according to some embodiments of the present disclosure.
**Figure 2** is a block diagram of a microdissection system according to some embodiments of the present disclosure.
**Figure 3** is a schematic diagram of a microdissection system according to some embodiments of the present disclosure.
**Figure 4** is a schematic diagram of an example microdissection system according to some embodiments of the present disclosure.
**Figure 5** is a flow diagram of an example application of microdissection using 3D imaging.
**Figures 6A to 6D** are a set of images which show an example image of a sample as well as genomic results purified from identified regions of interest according to some embodiments of the present disclosure.
**Figure 7** is a flow chart of a method according to some embodiments of the present disclosure.

### DETAILED DESCRIPTION

The following description of certain embodiments is merely exemplary in nature and is in no way intended to limit the scope of the disclosure or its applications or uses. In the following detailed description of embodiments of the present systems and methods, reference is made to the accompanying drawings which form a part hereof, and which are shown by way of illustration specific embodiments in which the described systems and methods may be practiced. These embodiments are described in sufficient detail to enable those skilled in the art to practice presently disclosed systems and methods, and it is to be understood that other embodiments may be utilized and that structural and logical changes may be made without departing from the spirit and scope of the disclosure. Moreover, for the purpose of clarity, detailed descriptions of certain features will not be discussed when they would be apparent to those with skill in the art so as not to obscure the description of embodiments of the disclosure. The following detailed description is therefore not to be taken in a limiting sense, and the scope of the disclosure is defined only by the appended claims.

Samples, such as biological samples, may include various regions of interest within the sample. In order to analyze the region of interest it may be useful to remove the region of interest from the larger sample. For example, if it is desirable to perform a genomic or proteomic analysis on certain type of tissue, it may be useful to examine the tissue and isolate the tissue of interest (e.g., carcinomas) from the larger sample, in order to then sequence or otherwise analyze the removed tissues of interest.

Current dissection techniques may be limited. For example, samples may be relatively thick, and it may be difficult to image through the entire thickness of the sample while the sample is intact. Techniques that involve sectioning the tissue may require fixation, freezing and/or embedding the sample in a medium, which may be slow, difficult, and/or may introduce changes to the structure and/or chemistry of the sample which are undesirable. There is thus a need to locate and remove regions of interest from within the volume of larger specimens.

The present disclosure is directed to three dimensional microdissection of samples. A sample may be imaged to generate a 3D image of the sample (or of a portion of the sample) based on that 3D image a region of interest may be identified, and an extraction system may remove the identified region of interest. For example, an imaging system, such as an open-top light sheet (OTLS) microscope may capture image slices throughout the tissue, which may be assembled into a 3D volumetric image of the sample. In some embodiments, the imaging system may first perform a (relatively) low resolution survey of the sample, and then perform (relatively) high resolution imaging of selection portions of the sample based on regions identified in the low resolution survey. The region of interest may be identified based on the high resolution imaging, the low resolution images, or combinations thereof.

Regions of interest may be identified within the 3D image. For example, an automated and/or manual segmentation may be used to select regions of interest within the 3D image. In some example applications, imaging and/or labelling of the sample may aid in the identification of regions of interest (e.g., by selectively labelling a tissue of interest). In some embodiments, an automated tool such as a trained classifier may be used to identify regions of interest automatically within the imaged sample.

Once the regions of interest (ROI(s)) have been identified, they may be extracted from the sample. For example, an extraction tool such as a cutting element may be used to remove the regions of interest based on their identified location within the 3D image. In some embodiments, the extraction tool may be attached to an actuator which may provide automated (or semi-automated) movement of the extraction tool relative to the sample. For example, coordinates of the ROI(s) within the 3D image may be used to guide the relative position of the extraction tool and the sample. In some embodiments, the extraction tool may be manually or semi-manually operated. In some embodiments, the extraction tool may be attached to the imaging system. In some embodiments, the extraction tool may be a separate system from the imaging system.

In an example application, the extracted tissue may be further processed, for example to purify one or more biological molecules for further analysis. For example, nucleic acids (e.g., DNA and/or RNA), proteins, metabolic markers, other chemicals, or combinations thereof may be purified or otherwise extracted from the extracted tissue. The purified biological molecules may then be used for analysis, monitoring, diagnosis, research, and/or other purposes. In one example application, 3D microscopy and microdissection methods may be used characterize response and resistance to neoadjuvant total androgen ablative therapy (AAT) in patients with high risk localized prostate cancer (PC). OTLS microscopy may be used to image prostate samples (e.g., prostate biopsies) and 3D microdissection may be used to remove regions of interest (e.g., identified carcinomas). The molecular results from the removed regions of the interest may be compared to the pre-treatment biopsies and lymph node metastases, if present. This may aid in understanding the response of prostate cancer to total AAT, which may ultimately lead to more personalized treatments for patients with high risk localized PC.

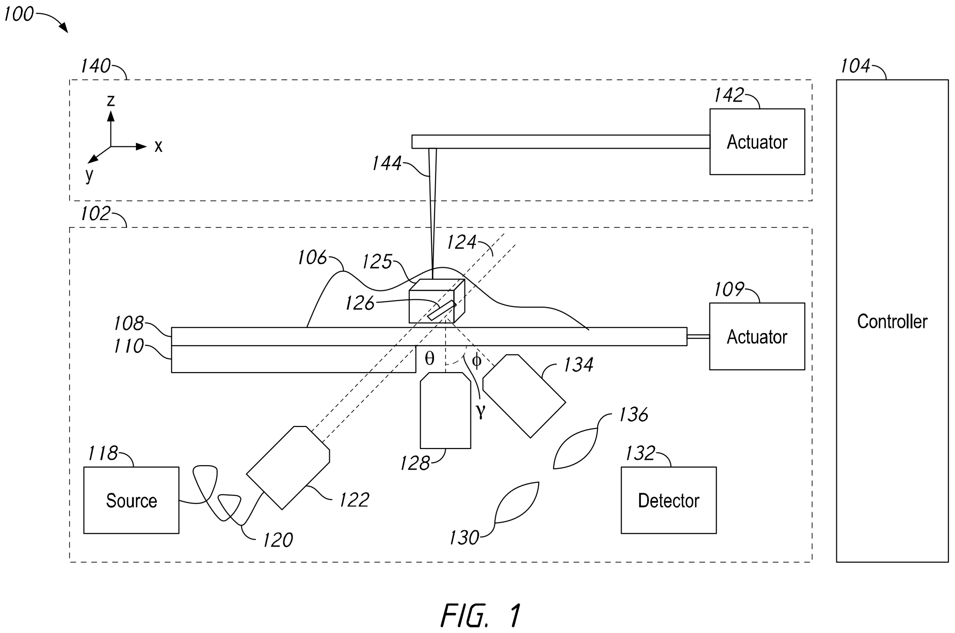

**Figure** 1 is a block diagram of a microdissection system according to some embodiments of the present disclosure. The microdissection system 100 includes an imaging system 102, here shown as an OTLS microscope 102, an extraction system 140, and an optional controller 104. In some embodiments, instead of, or in addition to, the controller 104 the imaging system and/or extraction system 140 may include manual controls not shown in Figure 1. In the view of Figure 1, structural elements such as connectors, housings, etc. have been omitted. In some embodiments, one or more components of the imaging system 102, extraction system 140 and/or controller 104 may be integrated together. In some embodiments, some or all of the imaging system 102, extraction system 140 and/or controller 104 may be separate systems.

The microscope 102 includes a sample holder 108 which supports a sample 106 along a top side of the sample holder 108. The microscope 102 has an illumination path and one or more collection paths which are separate from each other. The illumination path includes a source 118, illumination optics 120, and an illumination objective 122. The illumination path provides an illumination beam 124 which passes through the sample holder 108 to illuminate the sample 106.

The collection path(s) each include a collection objective and collection optics which serve to couple light from a focal region 126 illuminated by the illumination beam 124 into one or more detectors 132. In the example arrangement of Figure 1, two separate collection paths are shown, each of which is coupled to a same detector 132, however more or fewer collection paths may be used, and in some embodiments each collection path may have a separate detector. The first collection path has a first collection objective 128 and first collection optics 130. The second collection path as a second collection objective 134 and second collection optics 136. The optical axis of the collection objective 128 may be at an angle θ relative to an optical axis of the illumination objective 122 (e.g., at an angle θ relative to the illumination beam 124). The angle θ may be non-orthogonal (e.g., an acute angle). Such an arrangement of illumination and optical components may generally be referred to as a non-orthogonal, dual objective (NODO) system. The collection objective 134 has an optical axis which is at an angle ϕ with the optical axis of the illumination objective 110. The angle ϕ may, in some embodiments, be orthogonal (e.g., 90°). Such an arrangement may be referred to as an orthogonal dual objective (ODO) system. The example embodiment of Figure 1 includes both NODO and ODO collection paths. However, other example imaging systems 102 may include only a single collection path (e.g., either NODO or ODO).

The microdissection system 100 may be used for physical extraction of the region of interest 125, for virtual extraction of the region of interest 125, or combinations thereof. Virtual extraction may involve identifying a region of interest 125 and then performing a second round of imaging on the region of interest 125. For example, the first round of imaging may be at a first resolution, and the second round of imaging may be at a second resolution which is higher than the first. Physical extraction may involve using the extraction system 104 to separate the region of interest 125 from surrounding parts of the sample 106 so that the region of interest 125 may be removed for other imaging/analysis.

In some embodiments, the extraction system 104 may be a virtual extraction system, and may encompass one or more components of the imaging system 102. For example, the collection path which includes objective 134 and 136 may be part of the extraction system 104, and may be used to capture a high resolution image of the region of interest 125 once it has been identified by the system 100.

In some embodiments, the extraction system 104 may be a physical extraction system and may include an extraction tool or extraction element 144 which may be used to remove an identified region of interest 125 from the sample 106. In some embodiments, extraction tool 144 may be a contact tool (e.g., a blade), which may come into mechanical contact with the sample 106 in order to separate the region of interest 125. In some embodiments, the extraction tool 144 may be a non-contact tool (e.g., a laser cutter) which separates the region of interest 125 without physical contact. The region of interest 125 may be identified based on images collected using the imaging system 102. The identification and/or extraction may be automatic, manual, or a combination thereof. The controller 104 may operate the imaging system 102 and/or extraction system 104 to direct the collection of images, identification of the region of interest 125 based on those images, and/or the extraction of the region of interest 125.

The illumination objective 122 and collection objective 128 may generally be located beneath a bottom side of the sample holder 108. This may leave the top side of the sample holder 108 relatively open, which in turn may allow for ease of placing samples 106 onto the sample holder 108. For example, the sample holder may have a top surface which includes a flat plat (e.g., analogous to a commercial flatbed scanner) and different samples may be placed onto the flat plate. This may also reduce/eliminate lateral constraints on the sample 106.

The imaging system 102 may enable rapid 3D microscopy of relatively large samples 106. For example, an OTLS imaging system 102 may be capable of imaging samples up to 10 cm x 10 cm x 0.4 cm in size. This may offer an advantage as other imaging systems may be more limited in the size and thickness of sample they can accommodate. The OTLS imaging system 102 may be capable of imaging through the entire thickness of the specimen (e.g., 0.4 cm). In contrast, traditional slide-based pathology samples may only be able to visualize a 5 micron section of a thick (~0.4 cm) tissue specimen.

The extraction system 140 may allow for relatively precise extraction of the region of interest 125 from the sample 106. In one example embodiment, the extraction tool 144 may be a razor blade which may have a precision of approximately 0.1 mm and the motorized stage driven by the actuator 142 may have an accuracy of 200 nm.

In some embodiments, the extraction system 140 may be mounted to the imaging system 102. The extraction system 140 may be integral to the imaging system 102 or may be a modular component which attaches to the imaging system. For example, the extraction system 140 may attach to the stage or sample holder 108 of the imaging system 102. In some embodiments, the extraction element 144 may be mounted such that it maintains a relatively fixed position relative to the sample holder 108, and the movement of the sample holder 108 (e.g., by actuator 109) may determine the movement of the extraction element 144 relative to the sample 106. In another example embodiment, the extraction element 144 may have its own actuator 142, and may be moved relative to the sample 106 and sample holder 108. In some embodiments, the extraction element 144 may be able to change the area of the sample it is operating on without movement of the extraction element 144 relative to the sample 106 (or in combination with such motion). For example, in some embodiments, the extraction element 144 may be a non-contact tool such as a laser cutter, and focusing elements may redirect a beam.

In some embodiments, the extraction system 140 and imaging system 102 may be separate systems. In some embodiments, the sample holder 108 may also be a modular component, and may be removed from the imaging system 102 and attached to the extraction system instead. For example, the sample holder 108 may be attached to the imaging system 102 and a 3D image generated. Regions of interest 125 in the 3D image may be identified. The sample holder 108 may be removed and attached to an extraction system 140. Based on the coordinates of the region(s) of interest 125 with respect to the sample holder, the extraction system 140 may extract the regions of interest 125 from the sample.

The extraction tool 144 may be a contact tool such as a mechanical cutting tool. For example, a razor blade "guillotine" may be used as the extraction tool 144. In other examples, other tools may be attached to the manipulator such as biopsy punch tools. The extraction tool 144 may be a non-contact tool such as a laser cutter. In some embodiments, the extraction tool may be one or more optical components (e.g., a collection objective or other collection optics) used for virtual extraction of the sample.

In some embodiments, the imaging system 102 may include an optional immersion fluid chamber 110, which in turn contains an immersion fluid 112. The immersion fluid 112 may help couple the illumination and/or collected light into the sample. For example, the immersion fluid 112 may act as an index matching fluid with the sample holder 108 and/or sample 106, which may reduce the refraction of light passing through it. In some embodiments, one or both of the illumination objective 122 and collection objective 128 may be an air objective, surrounded by an ambient medium (e.g., air). Accordingly, light may pass between air and the immersion fluid 112. An optional optical element, such as a lens or window, may help couple light between the air/immersion fluid interface(s). In some embodiments, one or both of the illumination objective 122 and collection objective 128 may be immersion objectives, where at least a portion of the objective (e.g., the front lens) is in contact with the immersion fluid 112. For example, the illumination objective 122 may be an air objective, and the illumination beam 124 may pass through air, through a lens/window (not shown) into the immersion fluid 112 before reaching the sample 126. Light from the focal region 126 may be collected by the collection objective 128 through the immersion fluid 112 without passing through air.

The source 118 provides illumination light along the illumination path to illuminate a focal region 126 of a sample 106. The source 118 may be a narrow band source, such as a laser or a light emitting diode (LED) which may emit light in a narrow spectrum. In some embodiments, the light may be a broadband source (e.g., an incandescent source, an arc source) which may produce broad spectrum (e.g., white) illumination. In some embodiments, one or more portions of the illumination light may be outside of the visible range. In some embodiments, a filter (not shown) may be used as part of the illumination path to further refine the wavelength(s) of the illumination light. For example, a bandpass filter may receive broadband illumination from the source 118, and provide illumination light in a narrower spectrum. In some embodiments, the light source 103 may be a laser, and may generate collimated light.

In some embodiments, the optical system 100 may be used to image fluorescence in the sample 106. The illumination beam 124 may include light at a particular excitation wavelength, which may excite fluorophores in the sample 106. The illumination beam 124 may include a broad spectrum of light which includes the excitation wavelength, or may be a narrow band centered on the excitation wavelength. In some embodiments, the light source 118 may produce a narrow spectrum of light centered on (or close to) the excitation wavelength. In some embodiments, filter(s) (not shown) may be used in the illumination optics 120 to limit the illumination beam 124 to wavelengths near the excitation wavelength. Once excited by the illumination beam 124, the fluorophores in the sample 106 may emit light (which may be centered on a given emission wavelength). The collection path (e.g., collection optics 130) may include one or more filters which may be used to limit the light which reaches the detector 132 to wavelengths of light near the emission wavelength.

The illumination optics 120 may couple the light from the source 118 to the illumination objective 122. For example, the illumination optics 120 may include an optical fiber which carries light from the source 118 to a back end of the illumination objective 122. In some embodiments, the illumination optics 120 may couple the light between the source 118 and the objective 122 without substantially altering the light provided by the source 118. In some embodiments, the illumination optics 120 may alter the shape, wavelength, intensity and/or other properties of the light provided by the source 118. For example, the illumination optics 120 may receive broadband light from the source 118 and may filter the light (e.g., with a filter, diffraction grating, acousto-optic modulator, etc.) to provide narrow band light to the objective 122.

In some embodiments, the illumination optics 120 may include scanning optics (e.g., scanning mirrors) which may be used to scan the illumination light. In some embodiments, the scanning optics may be used to generate the illumination beam 124 in the form of a light sheet (e.g., by scanning the light back and forth in one axis, but not in another). In some embodiments, the scanning optics may be used to change a position of a field of view relative to the sample 106.

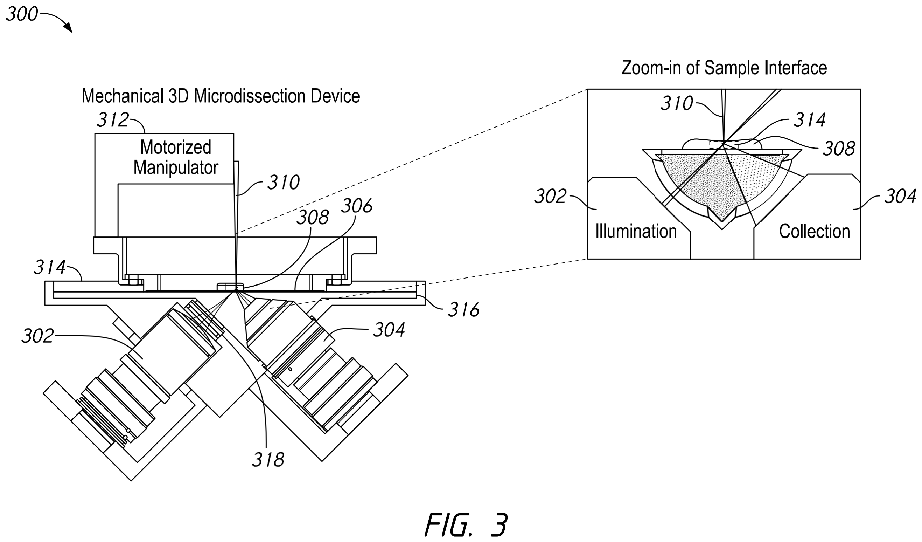

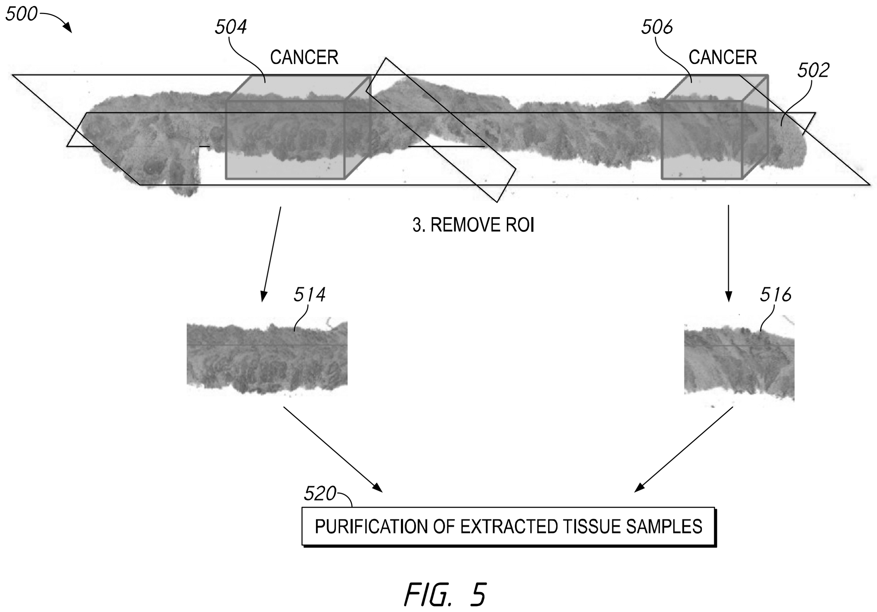

In some embodiments, the illumination optics 120 may be adjustable. For example, if the microscope 102 supports more than one imaging mode (e.g., multiple collection objectives which share the same illumination objective), then the illumination optics 120 may include one or more components which may be adjusted or tuned depending on the imaging mode. An example microscope which uses multiple imaging modes is discussed in more detail in Figure 3, and an example of tuning the illumination optics 120 is discussed in more detail in Figure 5.

The illumination path may provide an illumination beam 124 which is a light sheet as part of light sheet microscopy or light-sheet fluorescent microscopy (LSFM). The light sheet may have a generally elliptical cross section, with a first numerical aperture along a first axis (e.g., the y-axis) and a second numerical aperture greater than the first numerical aperture along a second axis which is orthogonal to the first axis. The illumination optics 120 may include optics which reshape light received from the source 118 into an illumination sheet. For example, the illumination optics 120 may include one or more cylindrical optics which focus light in one axis, but not in the orthogonal axis.

In some embodiments, the illumination optics 120 may include scanning optics, which may be used to scan the illumination beam 124 relative to the sample 106. For example, the region illuminated by the illumination beam may be smaller than the desired focal region 126. In this case, the illumination optics 120 may rapidly oscillate the illumination beam 124 across the desired focal region 126 to ensure illumination of the focal region 126.

The illumination objective 122 may include one or more lenses which provide the illumination beam 124. For example, the illumination objective 122 may focus the illumination beam 124 towards the focal region 126. The sample holder 108 may position the sample 106 such that the focal region 126 is generally within the sample 106. In some embodiments, the sample holder 108 may include one or more actuators which may position the sample 106 relative to the focal region 126. The illumination objective may, in some embodiments, be a commercial objective lens which includes one or more internal optical elements. In some embodiments, the illumination objective 122 may be surrounded by an ambient environment (e.g., air), and the illumination objective 122 may be an air objective. The illumination objective 122 may be characterized by one or more numerical apertures, which may be based on the angle(s) at which light converges at the focal region 126. In some embodiments, the illumination objective 122 may be an immersion objective, and at least a portion of the illumination objective 122 may be in contact with the immersion fluid 112.

In some embodiments, the focal region 126 may be idealized as a focal plane. The illumination beam 124 may be directed onto the sample 106 to generate a focal region 126. The focal region 126 may be idealized as a flat (e.g., 2D) plane illuminated by the illumination light sheet 124. The focal plane may be aligned with the illumination light sheet 124 and may represent a region imaged by the illumination beam 124 from which the collection objective 128 can collect light. In some embodiments, the focal region 126 may represent a single field of view of the collection objective 128. In some embodiments, the focal region 126 may represent an area that the field of view of the collection objective 128 may be scanned across.

The sample 106 may be supported by an upper surface of the sample holder 108. In some embodiments, the sample 106 may be placed directly onto the upper surface of the sample holder 108. In some embodiments, the sample 106 may be packaged in a container (e.g., on a glass slide, in a well plate, in a tissue culture flask, etc.) and the container may be placed on the sample holder 108. In some embodiments, the container may be integrated into the sample holder 108. In some embodiments, the sample 106 may be processed before imaging on the optical system 100. For example, the sample 106 may be washed, sliced, and/or labelled before imaging.

In some embodiments, the sample 106 may be a biological sample. For example, the sample 106 may be a tissue which has been biopsied from an area of suspected disease (e.g., cancer). In some embodiments, the tissue may undergo various processing, such as optical clearance, tissue slicing, and/or labeling before being examined by the optical system 100. In some embodiments, examination of the tissue with the optical system 100 may be used for diagnosis, to determine treatment progress, to monitor disease progression, etc. The sample 106 may be fresh, frozen, fixed, sliced, de-paraffinized or otherwise prepared.

In some embodiments, the sample 106 may be non-biological. For example, the sample 106 may be a fluid, and may contain one or more components for investigation. For example, the sample 106 may be a combustion gas, and the optical system 106 may perform particle image velocimetry (PIV) measurements to characterize components of the gas.

In some embodiments, the sample 106 may include one or more types of fluorophores. The fluorophores may be intrinsic to the sample 106 (e.g., DNA and proteins in biological samples) or may be a fluorescent label (e.g., acridine orange, Eosin) applied to the sample 106. Some samples 106 may include a mix of intrinsic types of fluorophores and fluorescent labels. Each type of fluorophore may have an excitation spectrum, which may be centered on an excitation wavelength. When a fluorophore is excited by light in the excitation spectrum, it may emit light in an emission spectrum, which maybe centered on an emission wavelength which is different than (e.g., red-shifted from) the excitation wavelength.

The sample holder 108 may support the sample 106 over a material which is generally transparent to illumination beam 124 and to light collected from the focal region 126 of the sample 106. In some embodiments, the sample holder 108 may have a window of the transparent material which the sample 106 may be positioned over, and a remainder of the sample holder 108 may be formed from a non-transparent material. In some embodiments, the sample holder 108 may be made from a transparent material. For example, the sample holder 108 may include a glass plate which supports the sample 106.

In some embodiments, the sample holder 108 may include one or more structures to support the sample 106. For example, the sample holder 108 may include clips or a well. In some embodiments, the sample holder 108 may be a modular component of the system 100, and different sample holders 108 may be swapped in or out depending on the type of sample, the type of imaging, the wavelengths of the illumination/collected light, and combinations thereof.

The sample holder 108 may have a second surface (e.g., a lower surface) which is opposite the surface of the sample holder 108 which supports the sample 106. In some embodiments, an immersion chamber 110 which holds an immersion fluid 112 may be positioned below the second surface of the sample holder 108. In some embodiments, the immersion chamber 110 may have an open top, and the immersion fluid 112 may be in contact with the second surface of the sample holder 108. In some embodiments, while the second surface of the sample holder 108 may be in contact with the immersion fluid 112, the first surface of the sample holder 108 (which supports the sample 106) may be in contact with the same environment as the objectives 122 and 128 (e.g., air).

The sample holder 108 may be coupled to an actuator 109, which may be capable of moving the sample holder 108 in one or more directions. In some embodiments, the sample holder 108 may be movable in one or more dimensions relative to the immersion chamber 110 and objectives 122 and 128. For example, the sample holder 108 may be movable along the x-axis, y-axis, and/or z-axis, and/or may rotated (e.g., tip, tilt, etc.). The sample holder 108 may be moved to change the position of the focal region 126 within the sample 106 and/or to move the sample holder 108 between a loading position and an imaging position. In some embodiments, the actuator may be a manual actuator, such as screws or coarse/fine adjustment knobs. In some embodiments, the actuator may be automated, such as an electric motor, which may respond to manual input and/or instructions from a controller 104. In some embodiments the actuator 109 may respond to both manual adjustment and automatic control (e.g., a knob which responds to both manual turning and to instructions from the controller 104).

Similar to the actuator 109, the actuator 142 may also be manual, automatic, or combination thereof. In some embodiments, one actuator may be automatic, while the other may be manual. For example, the actuator 109 may be motorized and may position the sample with respect to an X-Y axis, while manual control of the actuator 142 may lower the extraction tool 144 into an engaged position for extraction.

The optional immersion chamber 110 contains the immersion fluid 112. In some embodiments, the immersion chamber 110 may include a source and/or sink, which may be useful for changing out the immersion fluid 112. For example, the immersion chamber 110 may be coupled to a fluid input line (which in turn may be coupled to a pump and/or reservoir) which provides the immersion fluid 112 and a drain which may be opened to remove the immersion fluid 112 from the immersion chamber 110. As described in more detail herein, the type of immersion fluid may be chosen based on a refractive index of the sample 106 and/or sample holder 108.

The collection path may receive light from a focal region 126 and direct the received light onto a detector 132 which may image and/or otherwise measure the received light. The light from the focal region 126 may be a redirected portion of the illumination beam 124 (e.g., scattered and/or reflected light), may be light emitted from the focal region 126 in response to the illumination beam 124 (e.g., via fluorescence), or combinations thereof. The collected light may pass through the sample holder 108 towards the collection objective 128.

In the NODO geometry of Figure 1, the collection path may have a principle optical axis arranged at an angle γ relative to the plane of the sample holder 108 (e.g. the XY-plane of Figure 1). In some embodiments, such as the one illustrated in Figure 1, the angle γ may be approximately 90°, i.e. the collection path may have a principle optical axis which is approximately orthogonal to the plane of the sample holder 108. The angle γ may be sufficiently close to 90°, i.e. may be approximately orthogonal, if the quality of the image collected by the collection objective remains diffraction limited, i.e. using as a figure of merit the Strehl ratio, where the Strehl ratio is greater than approximately 0.8. As will be apparent to the artisan, the Strehl ratio can depend on many parameters potentially applicable to a given OTLS microscopy system, such as index mismatch (i.e. the optical path difference, or the product of the refractive index difference between the holder and the immersion medium / cleared tissue sample and the thickness of the holder), the NAs of the illumination and collection objectives, the field of view of the objective, the wavelength of the illumination light and/or collected light, and the particular objective used, in addition to the angle γ.

The illumination path may have a principle optical axis arranged at an angle θ relative to the principle optical axis of the collection path, and the angle θ may be non-orthogonal, i.e. may be an acute angle. Several considerations can bound the range of acceptable values of the angle θ. For example, it may be impractical for the angle to be at or near 90°, i.e. near parallel to the plane of the specimen holder, because it would intersect with the specimen holder, and constrain the lateral dimensions of the specimen. Index matching constraints may also become too onerous, even for the relatively lower NA of the illumination beam. Other factors may limit the lower end of the range of values for the angle θ, including the physical constraints imposed by the mechanical housing of the collection objective.

The geometry of the focal region 126 may be defined in part by the field of view of the collection path, which in turn may depend in part on the numerical aperture of the collection objective 128 or 134. Since the two collection paths may have generally similar components, only the components of one collection path will be described in detail. Similar to the illumination objective 122, the collection objective 128 may be a commercial objective which includes one or more lenses. In some embodiments, the collection objective 128 may be an air objective. In some embodiments, the collection objective 128 may be an immersion objective (e.g., an oil immersion objective). In some embodiments, the collection objective 128 may use a different immersion medium than the immersion fluid 112 used in the illumination path. In some embodiments, the focal region which the collection path is focused on and the focal region which the illumination path is focused on may generally overlap at the focal region 126. In some embodiments, the illumination and collection paths may have different shapes, sizes, and/or locations of their respective focal regions.

The collection path includes collection optics 130 which may redirect light from the collection objective onto the detector 132. For example, the collection optics 130 may be a tube lens designed to focus light from the back end of the collection objective into an image which is projected on the detector 132. In some embodiments, the collection optics 130 may include one or more elements which alter the light received from the collection objective 128. For example, the collection optics 130 may include filters, mirrors, de-scanning optics, or combinations thereof.

The collection optics 130 may include optics which may reorient a view of the focal region 126. Since the axis of the collection objective 128 is at an angle θ relative to the focal region 126, the image may be distorted. The collection optics 130 may include one or more features which may reorient the image to account for the angle θ before the image is projected on the detector 132. For example, the collection optics 130 may include a remote focus, where a first lens projects an image of the light collected by the collection objective 128, and a second lens images that remote image at an angle which cancels out the angle θ. This may correct the distortion due to the angle θ before the light reaches the detector 132. Other methods of reorienting the image may be used in other example embodiments.

The detector 132 may be used for imaging the focal region 126. In some embodiments, the detector 132 may represent an eyepiece, such that a user may observe the focal region 126. In some embodiments, the detector 132 may produce a signal to record an image of the focal region 126. For example, the detector 132 may include a CCD or CMOS array, which may generate an electronic signal based on the light incident on the array.

The microscope 102 may be coupled to a controller 104 which may be used to operate one or more parts of the microscope 102 and/or extraction system 140. For example, the controller 104 may direct the imaging system 102 in collecting images from the sample 106. The controller 104 may determine a region of interest 125 within the sample based on those images. The controller 104 may direct the extraction system 140 to extract the region of interest 125.

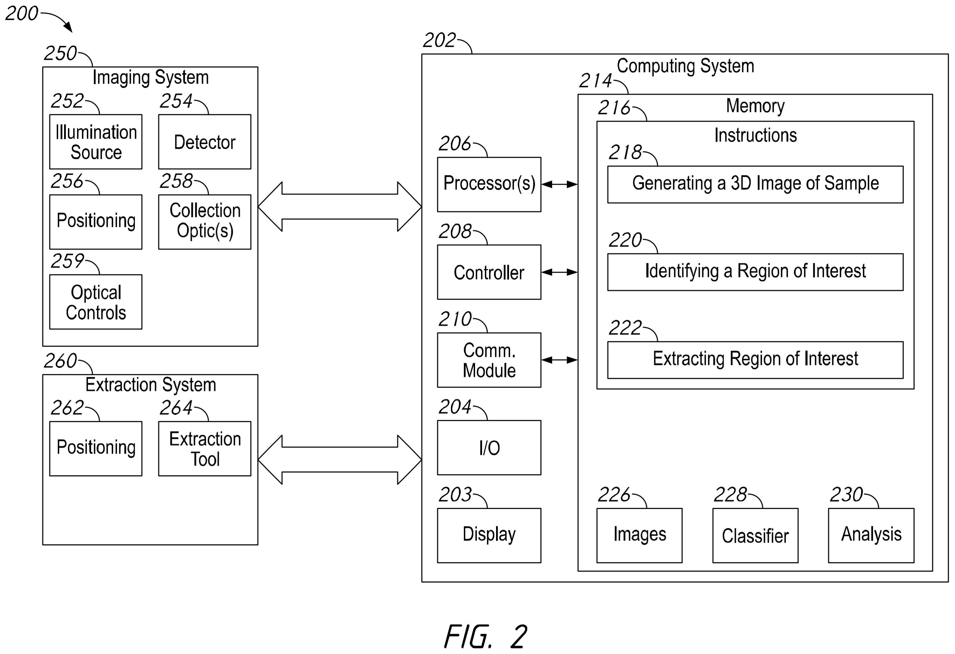

**Figure** 2 is a block diagram of a microdissection system according to some embodiments of the present disclosure. The microdissection system 200 of Figure 2 may, in some embodiments, implement the microdissection system 100 of Figure 1. The microdissection system 200 of Figure 2 includes an imaging system 250 (e.g., the microscope 102 of Figure 1), an extraction system 260 (e.g., 140 of Figure 1) and a computing system. The computing system 202 may act as the controller of the imaging system 250 and/or extraction system 260. In Figure 2 a single computing system 202 is shown, however in other example embodiments, separate computing systems may be used, for example one which controls the imaging system 250 and one which controls the extraction system 260.

The imaging system 250 (e.g., 102 of Figure 1) includes an illumination source 252 which includes one or more components (e.g., 118, 120, and 122 of Figure 1) which generates an illumination beam. The beam may be shaped as a light sheet in some embodiments. The imaging system 250 includes one or more sets of collection optics 258 (e.g., 128 and 130 and/or 134 and 136 of Figure 1). The collection optics 258 image one or more focal regions (e.g., 126 of Figure 1). The imaging system 250 also includes positioning controls 256. The positioning controls 256 (e.g., 109 of Figure 1) adjust a location of focal region(s) relative to a sample placed on the imaging system 250. The imaging system 250 includes a detector 254 (e.g., 132 of Figure 1), which receives light collected by the collection optics 258 and generates a signal based on that light. The signal is provided to the computing system 202.

In some embodiments the imaging system 250 may include additional optical controls 259 which may be operated to adjust the imaging system 250. For example, the imaging system 250 may include two collection paths as part of the collection optics 258 and the optical controls 259 may select which collection path is providing collecting light to the detector 254. Another example of optical controls 259 may be a filter wheel, which controls the wavelengths of light from the illumination source 252 and/or passing through the collection optics 258. This may be useful for fluorescent imaging if it is desired to switch between different flourophores.

The extraction system 260 (e.g., 140 of Figure 1) includes a positioning system 262 (e.g., 142 of Figure 1) and an extraction tool 264 (e.g., 144 of Figure 1). One or both of the positioning system 262 and extraction tool 264 may be operated by the computing system 202 to extract a region of interest from a sample. For example, in some embodiments, the positioning system 262 may be operated to move the extraction tool 264 relative to the sample. In some embodiments, the extraction tool 264 may be a contact tool, such as a cutting element (e.g., a razor, a scalpel, a blade, a punch biopsy tool, etc.). In some embodiments, the extraction tool may be a non-contact tool (e.g., a laser cutting element) and may have controls which can be actuated by the computing system 202.

In some embodiments, the extraction system 260 may be used for virtual extraction and the extraction system 260 may include one or more optical components for imaging, similar to the imaging system 250. In some embodiments, the extraction system 260 may be integrated into the imaging system 250 and may share components with the imaging system 250. For example, the extraction system 260 may represent a second collection path, such as an ODO path, which shares a same detector 254 with the imaging system 250.

In some embodiments, the extraction system 260 and the imaging system 250 may be used together. For example, the extraction system 260 may be a modular component mounted on the imaging system 250. In another example, the extraction system 260 may be integrated with the imaging system. In some embodiments, when the extraction system 260 and imaging system are combined, the positioning systems 256 and 262 may work together to perform the extraction. For example, the positioning system 262 may move the extraction tool 264 between a position where it is disengaged and a position where it is engaged, and the positioning system 256 may be used to move the sample relative to the tool 264 when it is engaged. In some embodiments, the positioning system 262 may be omitted.

The computing system 202 includes one or more processors 206 which operate one or more instructions 216 which are stored in a memory 214 of the computing system 202. The processor 206 may operate one or more controllers 208 based on the instructions and various data received from the imaging system 250 and extraction system 260. The controller 208 may provide various signals to the imaging system 250 and/or extraction system 260 which may effect various operations of the imaging system and/or extraction system (e.g., by providing signals to actuators). Signals between the imaging system 250/extraction system 260 and the computing system 202 may pass through a communications module 210 (e.g., a wired and/or wireless communications module).

The computing system 202 includes a display 203 and one or more input/output (I/O) systems 204 which allow for a user to interact with the computing system 202. For example, the I/O system 204 may include various input devices such as a keypad, mouse, touchscreen etc. The display 203 shows various information, such as images based on data from the detector 254 and/or a graphical user interface which allows a user to visualize various controls and data.

The memory 214 includes a set of instructions 216, such as a computer program, which allow the computing system 202 to operate the imaging system 250 and extraction system 260 to image, identify, and extract a region of interest from a sample. The memory 214 also includes other information which may be useful, such as saved images 226, a trained classifier 228, and image analysis software 230.

The instructions 216 include box 218, which describes generating a 3D image of a sample. For example, the box 218 may include instructions which when executed by the processor 206 cause the computing system 202 to operate the imaging system. In some embodiments, the 3D image may be constructed from a number of imaging slices through the sample. For example, the instructions 218 may direct the imaging system 250 to capture a first image, at a first location, operate the positioning system 256 to move the focal region to a second location, and then capture a second image and so forth. The instructions 216 may include instructions for combining the imaging slices into an overall 3D image. For example in some embodiments, the positioning system 256 may provide coordinates for the image slices, and the 3D image may be constructed based, in part, on the coordinates. In some embodiments, the image slices may include overlapping regions with one or more neighboring image slices, and the instructions 216 may include a registration process which matches the overlapping regions. In some embodiments a combinations of techniques may be used to generate the 3D image.

The instructions 216 include box 220, which describes identifying a region of interest in the sample. The region of interest (e.g., 125 of Figure 1) may be chosen based on a specific application. For example, if the application is to measure biomarkers in a certain type of tissue, the region of interest may be that type of tissue within the sample.

In some embodiments, the region of interest may be identified manually. For example, an image of the 3D image may be presented to a user via the display 203, and the user may use one or more I/O tools to manually draw a border around the desired region of interest.

In some embodiments, the computing system 202 may automatically select the region of interest. For example, the memory 214 may include one or more image analysis tools 230 which may be used to select the region of interest based on the characteristics of the 3D image. In some embodiments, the manner in which the sample was prepared and/or imaged may determine how the region of interest is identified. For example, if the sample is prepared with a fluorescent stain which is specific to the desired tissue type, then the analysis tool 230 may be an intensity threshold which is used to select areas in the image which are illuminated under fluorescent imaging. Other analysis tools 230 may involve segmentation of the image, for example between nucleus and cytoplasm, etc.

In some embodiments, the memory 214 may include a trained classifier 228, which may be used to identify the regions of interest. The classifier 228 may be trained based on a set of training images and a machine learning algorithm. For example, the training images may represent labelled images which are labelled as containing (or not containing) the tissue of interest, and the classifier 228 may be generated based on the machine learning algorithm adjusting weights (or other parameters) of the classifier 228 as part of a process of training on the training images. The training images may be 2D images, 3D images, or a combination thereof.

In some embodiments, a mix of manual and automatic classification may be used. For example, the computing system 202 may generate an initial region of interest boundary, which may be presented to a user via the display 203 for further refinement and adjustment via the I/O system 204.

The instructions include box 222 which describes instructions for extracting the region of interest from the sample. The extraction may be virtual, physical, or a combination thereof.

In some embodiments, the instructions of box 222 may include virtual extraction of the region of interest. The virtual extraction may include imaging at a first resolution (e.g., as part of box 218 and then performing a virtual extraction at a second level of resolution. For example, if the sample is relatively large, it may be inefficient to gather high resolution 3D images of the entire sample, but lower resolution images may lack the amount of information for high quality identification of the region of interest. Accordingly, the box 218 may instruct the imaging system 250 to collect a first set of images of the sample using a lower-resolution collection path (e.g., 128 and 130 of Figure 1). The instructions 216 may include instructions for identifying preliminary regions of interest in the sample based on the first set of images and then virtually extracting those preliminary regions of interest by collecting a second set of high resolution images of the preliminary regions of interest. The high resolution images may be collected with a second set of collection optics (e.g., 134 and 136 of Figure 1). The preliminary regions of interest may be identified in a manner similar to the identification described in box 220. The virtually extracted regions may then be further used or analyzed. In some embodiments, the virtually extracted regions may be displayed to a user via the display 203. In some embodiments, one or more post-virtual extraction steps may be performed, such as image analysis, annotation, segmentation, or combinations thereof.

In some embodiments, the instructions of box 222 may include physical extraction of the region of the interest. The instructions 222 may cause the computing system 202 to operate the extraction system 260 to have the positioning system 262 move the extraction tool 264 relative to the sample. For example, the extraction tool 264 may be a cutting implement, and may be moved around a border of the region of the interest (or around a region which contains the region of interest). In some embodiments, the extraction tool 264 may cut a set shape (e.g., a punch biopsy tool) and may be directed to cut out an area which includes the region of interest. In some embodiments, a mix of manual and automatic control may be used. For example, the display 203 may show a position of the cutting tool relative to a displayed image and a user may guide the positioning system 262 to perform the extraction.

In some embodiments, the instructions of box 222 may cause both virtual and manual extraction to be performed. For example a first set of images may be collected to identify preliminary regions of interest (e.g., as in box 218) and then a second, higher resolution image of those preliminary regions may be generated. In some embodiments, the instructions 216 may include refining the preliminary regions of interest into the regions of interest based on the higher resolution images. Manual extraction may then be performed on the regions of interest to remove them from the sample.

The computing system 202 is shown in Figure 2 as a single unit which is separate from the imaging system 250 and extraction system 250. In some embodiments, there may be multiple computing systems (e.g., one for the imaging system 250 and one for the extraction system 260). In some embodiments, the computing system (or one or more components thereof) may be integrated with the imaging system 250 and/or extraction system 260). In some embodiments, the computing system 202 may be a general purpose computing system which runs software to operate the imaging system 250 and/or extraction system 260.

In some embodiments, various controls of the computing system 202, imaging system 250, and/or extraction system 260 may be manual, automatic, or a combination thereof. For example, the positioning systems 256 and 262 may include computing system driven actuators, manual controls, or a combination thereof. For example, the computing system 202 may both drive a position of the extraction tool relative to the sample, and manual controls may also allow a user to move the extraction tool 264.

**Figure** 3 is a schematic diagram of a microdissection system according to some embodiments of the present disclosure. The microdissection system 300 may, in some embodiments, implement the microdissection system 100 of Figure 1 and/or 200 of Figure 2. The microdissection system 300 shows an embodiment where the imaging system is a ODO system with a modular extraction system mounted on a stage of the system. For the sake of brevity, certain components of the microdissection system such as the light source, detector, various optics etc. have been omitted from the view of Figure 3.

The microdissection system 300 includes an illumination objective 302 (e.g., 122 of Figure 1) and a collection objective 304 (e.g., 134 of Figure 1). The illumination objective 302 may project an illumination light sheet through a lens or window 318 into an immersion fluid 316 of the sample holder 314. The illumination sheet passes through the immersion fluid and through a glass slide 306 which is mounted on the sample holder 314 into the sample 308. The collection objective 304 collects light from a focal region illuminated by the illumination objective 302 through the sample 308 and immersion fluid 316. In the embodiment of Figure 3, the collection objective 304 is an immersion objective, and the collection objective 304 may be in contact with the immersion fluid 316. Since the embodiment of Figure 3 shows an ODO system, an optical axis of the illumination objective 302 and an optical axis of the collection objective 304 may be orthogonal to each other (e.g., at or about 90°). An inset shows a representation of how the illumination and collection objectives interact with the sample 308 to image a region of interest 314. In the inset, a different embodiment is shown where instead of being an immersion objective, the collection objective 304 also is separated from the immersion fluid 316 by a window similar to the window 318.

In the embodiment of Figure 3, the extraction system 312 is mounted to the sample holder 314. For example, the extraction system 312 may be integrated with the sample holder 314 or may be a modular component which is attached to the sample holder. The extraction system 312 includes an armature which supports an extraction tool 310, in this case a cutting element such as a blade. The armature of the extraction system 312 includes a motorized manipulator (e.g., actuator 142 of Figure 1) which may move the extraction tool 310 relative to the sample 308 and the sample holder 314. The extraction system 312 may be mounted on a top side of the sample holder 314, opposite the side that the objectives 302 and 304 are located on.

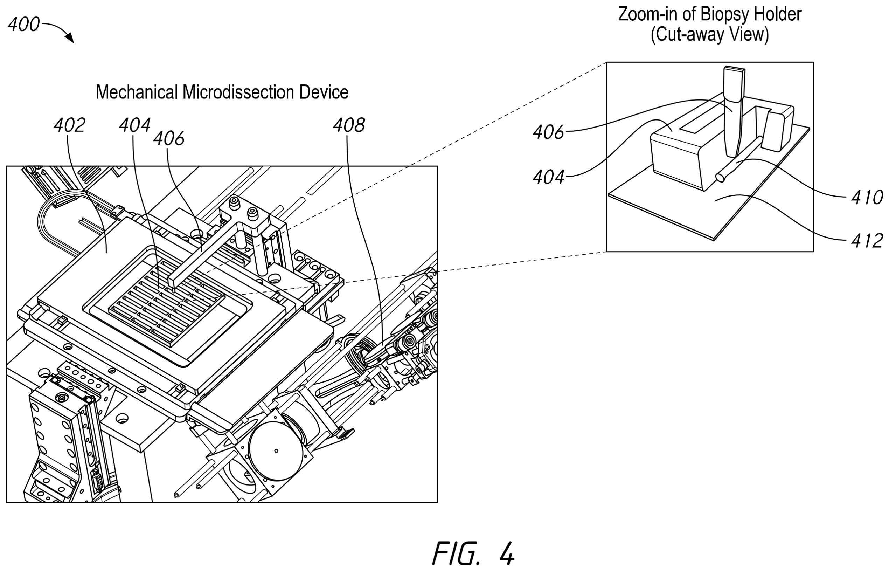

**Figure 4** is a schematic diagram of an example microdissection system according to some embodiments of the present disclosure. The example microdissection system 400 may, in some embodiments, implement the microdissection system 100 of Figure 1 and/or 200 of Figure 2. The microdissection system 400 may be generally similar to the microdissection system 300 of Figure 3, however in the microdissection system 400, instead of tissue samples resting on a glass slide, the tissue samples are core needle biopsies (CNBs) such as 410. The CNBs may be positioned in a biopsy holder 404 and a motorized razor "guillotine" 406 may be used as the extraction system to dissect the CNBs based on the coordinates of regions of interest in a 3D image of the CNBs.

The images may be collected by an OTLS imaging system 408 (e.g., an ODO and/or NODO system) similar to the ones previously described with respect to Figures 1-3. Since the imaging system 408 may generally be similar, for the sake of brevity it will not be described again in detail with respect to Figure 4. In the view of Figure 4 many of the components of the imaging system 408 are blocked from view by the sample holder 402.

The microdissection system 400 includes a sample holder 402 (e.g., 108 of Figure 1), such as a motorized X-Y stage. The sample holder 402 may be operated to move back and forth in two orthogonal axes by a controller (e.g., 104 of Figure 1 and/or 202 of Figure 2) which is not shown in Figure 4. The sample holder 402 supports a biopsy holder 404, a portion of which is shown in more detail in the inset. The biopsy holder 404 includes a number of troughs or wells, each of which may hold a CNB such as 410. A bottom of the biopsy holder 404 is formed from a transparent material, such as glass slide or coverslip 412. A motorized guillotine cutter 406 may act as the extraction system and may be used to slice the CNBs in the biopsy holder 404.

In an example operation, the CNBs may be removed from a subject, and then prepared for imaging. For example, the CNBs may be optically cleared and then each optically cleared CNB may be placed in the biopsy holder 404. The biopsy holder 404 may be a modular 3D-printed biopsy holder that sits atop a stage 402 of the system 400. In some embodiments, multiple CNBs may be placed in individual "biopsy wells" of the biopsy holder 404. In an example implementation, each of the biopsy wells may measure approximately 1.5-mm wide by 3-cm long (to accommodate the largest CNBs), enabling precise mechanical microdissection of the biopsies with a motorized razor blade "guillotine" 406 that will be mounted above the sample-translation stage 402. The biopsy wells may have silica coverslips 412 adhered to the bottom of the chamber, in which the coverslip material (fused silica) will be ideally index-matched to the glass-plate sample holder via a thin film of index-matching oil.

The biopsy holder 404 may be placed onto the stage 402, and the optical system 408 may be used to image the biopsies in the wells of the biopsy holder 404. For example, the imaging system 408 may perform fluorescent imaging in slices through the biopsy, and then combine those slices into an overall 3D image of the CNB. Once a 3D image of the sample volume is collected, regions of interest may identified. For example, a trained pathologist may examine the 3D visualizations of prostate CNBs and will indicate the axial (x) coordinates of regions with relatively high tumor-cell content (> 75% tumor content) throughout the entire diameter of the CNB. These coordinates will be used for mechanical dissection using the guillotine mechanism, mounted above the microscope stage, without having the remove the CNBs from the microscope stage. In another example embodiment, automated identification of the regions of interest may be performed.

After 3D microdissection, the glass coverslip at the bottom of the biopsy wells will be removed, and the tumor regions will be retrieved and submitted for sequencing. At later times, the pathologists can view the 3D histology datasets more carefully for definitive diagnosis and grading of the tumors for prognostication and treatment decisions.

**Figure 5** is a flow diagram of an example application of microdissection using 3D imaging. The flow diagram may represent a work flow using any of the systems or apparatuses described herein. For example, the method of Figure 5 may be implemented using one or more of the microdissection systems of Figures 1-4. In the example application shown by the flow chart 500, tissue removed from a patient is analyzed to locate cancerous regions, so that the removed regions of interest (e.g., cancerous regions) may be further analyzed (e.g., by having biomarkers purified from them).

The flow diagram 500 shows an example image of a piece of tissue 502. The tissue image 502 shows a low resolution scan of a relatively large piece of tissue. Two regions of interest 504 and 506 have been identified based on the overall image of the tissue 502, and those regions have had high resolution 3D images generated (represented here by the cubes). For example, different image planes may be collected and assembled into a 3D volume image of the sample. The identification of the regions of interest 504 and 506 may be automated, manual, or combinations thereof. For example, a trained pathologist may review the overall image 502 and segment regions likely to include cancer 504 and 506. High resolution imaging of those regions may be performed and the pathologist may segment the cancer within those regions based on the high-resolution 3D images.

Based on the two identified regions of interest 504 and 506, two extracted regions 514 and 516 may be extracted from the tissue. For example, an extraction system may move an extraction tool relative to the sample (and/or the sample may be moved relative to the cutting tool) to slice out the extracted regions 514 and 516. The extracted region 514 may include all (or parts of) the region 504, and the extracted region 516 may include all (or parts of) the extracted region 506. In some embodiments, the movement of the sample and/or cutting tool may be manual, automatic, or combinations thereof.

The flow chart 500 also shows box 520, which describes purification of the extracted tissue samples 514 and 516. The extracted tissue may undergo purification to separate one or more biomarkers or other chemicals from the extracted tissue 514 and 516. Since the extracted tissue 514 and 516 represents regions which were identified as primarily including a single tissue type (in this example cancer) then the purified biomarkers may be strongly associated with that type of tissue.

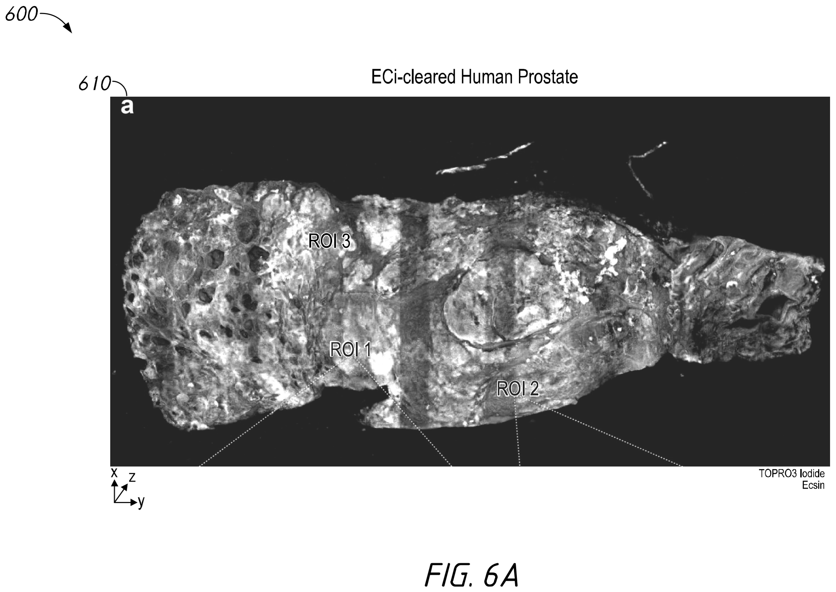

**Figures 6A to 6D** **are** a set of images which show an example image of a sample as well as genomic results purified from identified regions of interest according to some embodiments of the present disclosure. The data 600 of Figures 6A to 6D represent example data collected using a microdissection system, such as one or more of the microdissection systems 100, 200 300, and/or 400 of Figures 1-4. The results represent a particular example application based on imaging prostate tissue and removing ROIs to perform a genomic analysis on them.

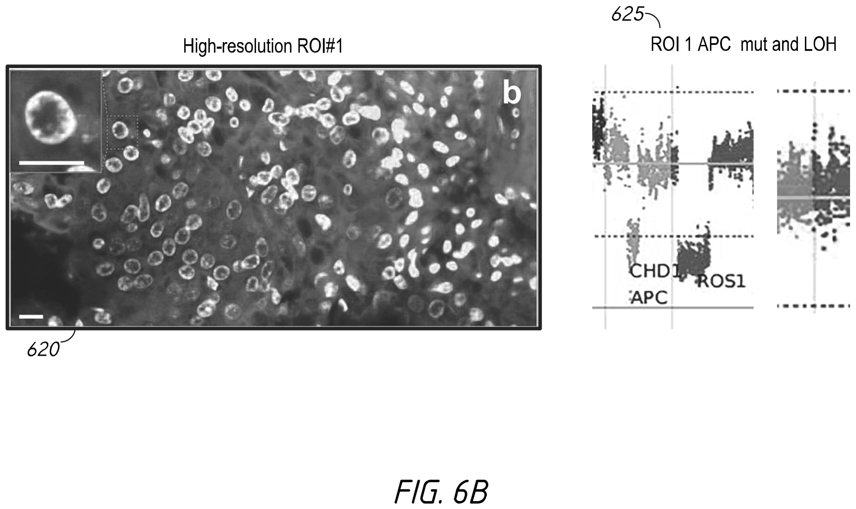

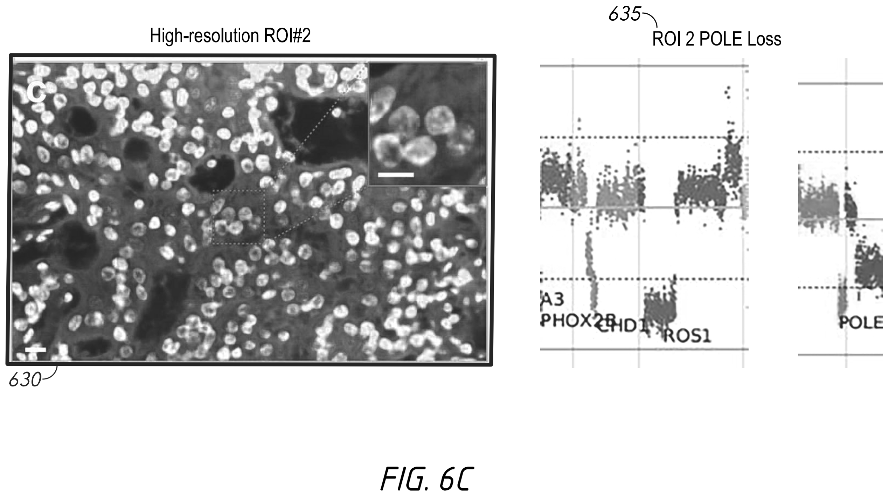

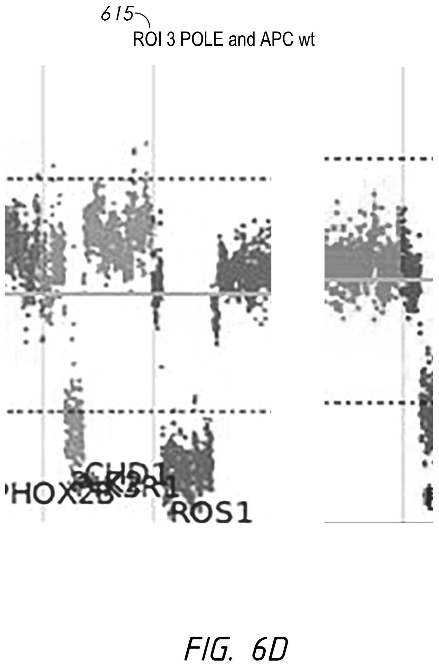

The image 610 in FIG. 6A shows a 2D view of fluorescently labelled human prostate biopsy. The biopsy is optically cleared and stained before imaging. The biopsy is placed on a stage or sample holder of an imaging system. The 2D view of the image 610 may be a slice through a 3D image collected of the tissue. Based on the 3D image that the image 610 represents a portion of, different regions of interest are identified. In the example of Figures 6A to 6D, the regions of interest are identified based on cell and tissue morphology, such as gland structure. For example, a trained pathologist may inspect the 3D image and locate the regions of interest. In the example of Figure 6A to 6D, 3 different regions of interest are located, ROI 1, ROI 2, and ROI 3. Images 620 (FIG. 6B) and 630 (FIG. 6C) show example high resolution images of ROI 1 and ROI 2 respectively. Based on the identification, the three regions of interest are removed using an extraction system. In this example application, purification of the nucleic acids from the extracted ROIs and genomic sequencing of those nucleic acids is performed. Images 625 (FIG. 6B), 635 (FIG. 6C), and 615 (FIG. 6D) shows plots of genetic results for ROIs 1, 2, and 3 respectively.

Three regions of interest (ROIs) with differing morphology were identified for DNA sequencing. The ROIs were removed and sequenced. Key genetic loci with differing copy number plots are shown. ROI1 has pure cribriform morphology (Grade Group 4) and an APC mutation with loss of heterozygosity. ROI2 has a mix of cribriform and well formed glands (Grade Group 3) and POLE loss. ROI3 has mostly well formed glands (Grade Group 2) and is wild-type for APC and POLE.

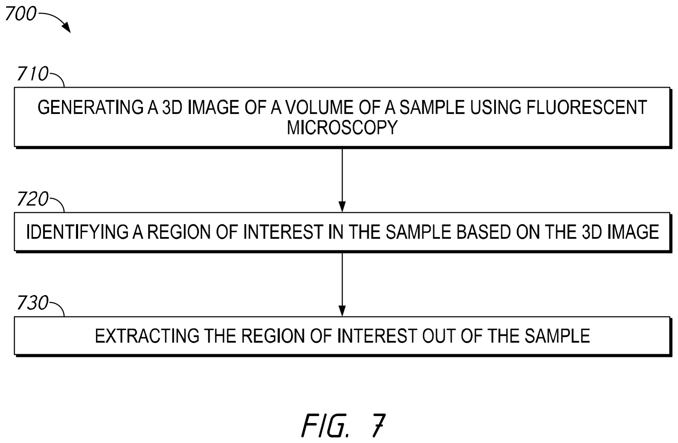

**Figure 7** is a flow chart of a method according to some embodiments of the present disclosure. The method 700 may, in some embodiments, be implemented by one or more of the microdissection systems described herein. For example, the method 700 may be implemented on one or more of the microdissection systems 100, 200, 300, and/or 400 of Figures 1-4.

The method 700 may generally begin with box 710, which describes generating a 3D image of a volume of a sample using fluorescent microscopy. The method 700 may include generating the 3D image with an OTLS microscope (e.g., imaging system 102 of Figure 1 and/or 250 of Figure 2). For example, the method 700 may include generating an illumination light sheet (e.g., 124 of Figure 1), passing the light sheet through a window or other transparent surface into the sample, and then collecting light through the sample and window. In some embodiments, the method 700 may include capturing a number of images of slices through the sample and then compositing those slices into the 3D image. For example, the method 700 may include taking a first slice image at a first location, taking a second slice image at a second location and so forth. In some embodiments, the method 700 may include moving a stage of the imaging system to change the slice which is being imaged. In some embodiments, the stage may be moved automatically (e.g., by controller 104 of Figure 1 and/or computing system 202 of Figure 2 operating an actuator).

In some embodiments, the method 700 may include one or more sample preparation steps before the imaging of box 710. For example, if the sample is a biological tissue, the method 700 may include removing the sample from an organism (e.g., taking a biopsy, such as a CNB, from a patient). The method 700 may include optically preparing the sample for imaging. For example, the method 700 may include optically clearing the sample. In some embodiments, the method 700 may include applying one or more stains or dyes to the sample. In some embodiments, the method 700 may include applying one or more specific stains which are targeted to various biomarkers of interest. For example, the method 700 may include applying a fluorescent dye which is specific to one or more components of the region of interest such as a type of tissue, a specific biomarker, etc.

Box 710 may generally followed by box 720, which describes identifying a region of interest in the sample based on the 3D image. The method 700 may include identifying the region of interest manually, automatically, or a combination thereof. For example, the method 700 may include manually selecting regions of interest based on a review by a trained pathologist. In some embodiments, the method 700 may include displaying the 3D image (e.g., on display 203 of Figure 2) and determining coordinates of the region of interest based on manual input (e.g., via I/O 204 of Figure 2).

In some embodiments, automatic identifying may be used, for example with computing system 202 of Figure 2. In some embodiments, the method 700 may include identifying the region based, at least in part, on image analysis. For example, if the sample is prepared with a fluorescent dye which is specific to the region of interest, then the method 700 may include applying an intensity threshold to the image and selecting the region of interest based on regions which are above the intensity threshold. In some embodiments, the method 700 may include using a trained classifier (e.g., 228 of Figure 2) to identify the regions of interest. In some embodiments, classifier may be trained on 2D images, 3D images, or a combination thereof.

Box 720 may generally be followed by box 730, which describes extracting the region of interest out of the sample. The extraction may be virtual, physical, or a combination thereof. The method 700 may include virtually extracting the region of interest, for example by generating a first low resolution image of the sample, selecting preliminary regions of interest, and then virtually extracting the preliminary regions of interest by generating high resolution images of the preliminary regions of interest, and determining if the preliminary regions of interest are the region of interest based on the high resolution images. The imaging and selection of the preliminary regions of interest may be generally analogous to the steps of boxes 710 and 720 described herein. In some embodiments, the low resolution image may be captured with a first collection path (e.g., 128 and 130 of Figure 1) while the high resolution images may be captured with a second collection path (e.g., 134 and 136 of Figure 1) of the imaging system.

In some embodiments, the method 700 may include physically extracting the region of interest. For example, the method 700 may include using an extraction system (e.g., 140 of Figure 1 and/or 260 of Figure 2) to extract the region of interest. For example, the method 700 may include moving an extraction tool relative the sample, moving the sample relative to the extraction tool, or combinations thereof. In some embodiments, the method 700 may include moving the extraction tool (and/or sample) manually, automatically, or combinations thereof. For example, the method 700 may include displaying an outline of the region of interest and a current position of the extraction tool to allow manual movement of the extraction tool. In some embodiments, a controller, such as computing system 202 of Figure 2 may automatically move the extraction tool. In some embodiments, the extraction tool may be a cutting element, such as blade, guillotine cutter, punch biopsy or other sharp edge. In some embodiments, the extraction tool may be an optical cutting tool such as laser cutter.

In some embodiments, the method 700 may include both virtual and physical extraction of the region of interest. For example, the method 700 may include virtually extracting the region of interest and then physically extracting the region of interest.

In some embodiments, the method 700 may include processing the extracted region of interest. For example, the method 700 may include purifying nucleic acids, proteins, metabolites, carbohydrates, lipids, or combinations thereof from the extracted region of interest.

In some embodiments, the method 700 may include performing the imaging of the sample on a first system, and performing the extraction on a second system separate from the first system. In some embodiments, the method 700 may include performing the imaging and the extraction on a same system.

Of course, it is to be appreciated that any one of the examples, embodiments or processes described herein may be combined with one or more other examples, embodiments and/or processes or be separated and/or performed amongst separate devices or device portions in accordance with the present systems, devices and methods.

Finally, the above-discussion is intended to be merely illustrative of the present system and should not be construed as limiting the appended claims to any particular embodiment or group of embodiments. Thus, while the present system has been described in particular detail with reference to exemplary embodiments, it should also be appreciated that numerous modifications and alternative embodiments may be devised by those having ordinary skill in the art without departing from the broader and intended spirit and scope of the present system as set forth in the claims that follow. Accordingly, the specification and drawings are to be regarded in an illustrative manner and are not intended to limit the scope of the appended claims.

## Claims

1. A method comprising:
generating a 3D image of a volume of a sample (106) using fluorescent microscopy;
identifying a region of interest in the sample (106) based on the 3D image; and
extracting the region of interest out of the sample (106).

2. The method of claim 1, further comprising generating the 3D image with an open-top light sheet microscope (102).

3. The method of claim 1, further comprising performing automatic identification of the region of interest using a trained classifier (228).

4. The method of claim 3, further comprising training the classifier with 2D training images, 3D training images, or combinations thereof.

5. The method of claim 1, further comprising purifying nucleic acids, proteins, metabolites, carbohydrates, lipids, or combinations thereof.

6. The method of claim 1, further comprising generating the 3D image with a first system and cutting the region of interest with a second system separate from the first system.

7. The method of claim 1, further comprising capturing a plurality of 2D images of the sample and generating the 3D image based on the plurality of 2D images.

8. The method of claim 1, further comprising extracting the region of interest with a cutting element.

9. The method of claim 1, further comprising extracting the region of interest with an optical cutting tool.

10. The method of claim 1, further comprising labelling the sample with a fluorescent dye specific to one or more components of the region of interest.

11. The method of claim 1, wherein the extracting the region of interest out of the sample includes:
causing an extraction tool to extract the region of interest based on instructions executed by a processor.

12. The method of claim 1, wherein the region of interest is identified based in part on a classifier.

13. The method of claim 1, further comprising:
displaying the 3D image; and
receiving a manual input of the region of interest based on the 3D image.

14. The method of claim 11, further comprising:
operating an actuator (109) to move the extraction tool relative to the sample, the sample relative to the extraction tool, or combinations thereof.

15. The method of claim 1, further comprising:
capturing a first 3D image at a first resolution;
identifying a preliminary region of interest based on the first 3D image;
capturing a second 3D image of the preliminary region of interest based on the first 3D image, wherein the second 3D image is at a second resolution higher than the first resolution; and
determining if the preliminary region of interest is the region of interest based on the second 3D image.
